# EUROPEAN PATENT SPECIFICATION

(11) **EP 1 057 719 B1**
(45) Date of publication and mention of the grant of the patent: **01.10.2003**
(21) Application number: 00650062.3
(22) Date of filing: 02.06.2000
(51) Int. Cl.: B62D 53/06, B60P 1/64

(54) **An articulated trailer**
Sattelaufliegeranhänger
Semi-remorque

(30) Priority: 04.06.1999 IE 990464
(43) Date of publication of application: 06.12.2000
(73) Proprietor: Dennison, Robert, Naas, County of Kildare (IE)
(72) Inventor: Dennison, Robert, Naas, County of Kildare (IE)
(74) Representative: Schütte, Gearoid

(56) References cited:
- BE-A- 1 006 469
- DE-U- 29 806 318
- US-A- 5 193 836

## Description

This invention relates to articulated trailers for the transport of freight containers.

The invention is particularly concerned with an articulated trailer for the transport of freight containers of the type comprising an elongate wheeled chassis having a kingpin adjacent a front end of the chassis for engagement with a fifth wheel coupling on a tractor vehicle, a top of the chassis defining a bed for reception of a container with a plurality of twist-locks mounted on the chassis, said twist-locks having locking bolts which are releasably engagable with a complementary set of receivers on a container to secure the container on the trailer bed. Typically, pairs of twist-locks are provided at a front end and at a rear end of the chassis for engagement and locking with associated receiver blocks on the bottom of the container box to rigidly secure the container box on the trailer chassis for transport.

Container boxes are widely used for world-wide transport of goods. A problem can arise for transport companies in that standard U.S. and European container boxes have a number of differences to meet different regulatory requirements. For example, a standard European intermodal container box has a 13.6m length whilst a comparable standard U.S. container box has a 45ft (13.716m) length. The centre distance between the forward and rear twist-lock receivers is the same for both types of container box so . both types of container can be mounted on conventional trailers in the U.S. or Europe as required as the spacing between the twist-lock mounts on the trailers is the same. However, the positions of the twist-lock receivers on U.S. and European container boxes is not the same. In a U.S. container box the distance from the front end of the box to the front twist-lock receiver is the same as the distance between the rear twist-lock receiver and a rear end of the box (this distance being about 865mm for the 45ft box). The comparable 13.6m European box has a 900mm distance between the front end of the box and the front twist-lock receivers and a 714mm distance between the rear twist-lock receivers and the rear end of the box. European regulations require a maximum distance of 12m between the centre line/pivot axis of the kingpin and the rear end of the container box when it is loaded on the chassis. A single chassis configuration (in particular the relative positioning of the twist-locks and kingpin) cannot accommodate both types of container box and still meet European regulations. Therefore, generally separate trailers have to be provided for handling different boxes which provides added expense and inconvenience to transport companies. To overcome this problem some trailers have been provided with an adjustable kingpin which can be mounted in two different locations on the chassis, the location chosen depending on the type of container box to be carried. However, moving the kingpin between the two locations is a cumbersome, time consuming, messy and generally inconvenient task and therefore this is not generally regarded as a satisfactory solution and is not widely used.

The present invention is directed towards overcoming this problem.

The invention is characterised in that a fixed kingpin is mounted on the chassis and two sets of twist-locks are provided on the chassis, namely a first twist-lock set associated with carriage of a European standard 13.6m container box and a second twist-lock set associated with carriage of a U.S. standard 45ft container. The relevant positions of each set of twist-locks and the kingpin on the chassis are such that when each type of container box is mounted on the chassis engaged with its associated twist-lock set it will meet the statutory regulations.

It will be appreciated that from the road haulier's point of view and the tractor driver's point of view this is a very neat and simple solution as no adjustment of the kingpin is required and the container box, be it European or U.S. construction, can be simply dropped on to the relevant twist-lock set on the chassis. Thus a single trailer chassis can carry both U.S. and European type containers.

In a particularly preferred embodiment each set of twist-locks is positioned on the chassis such that upon engagement with the associated container the radius between a pivot axis of the kingpin and a front corner of the container is 2040mm.

In a further embodiment an associated pair of dual twist-lock assemblies are mounted on the chassis forwardly of the kingpin. Each dual twist-lock assembly includes two juxtaposed twist-locks, namely a front twist-lock associated with the U.S. container and a rear twist-lock associated with the European container, a complementary pair of rear twist-locks associated with each pair of twist-locks in the front dual twist-lock assemblies being mounted at a rear end of the trailer.

In another embodiment the locking bolts in each front dual twist-lock assembly have axes which are longitudinally spaced-apart on the chassis by a distance of about 151mm and the longitudinal distance between the rear twist-lock bolt axis and a rotational axis of the kingpin is about 700mm.

In an another embodiment a pair of dual twist-lock assemblies are mounted at a rear end of the trailer, each rear dual twist-lock assembly having a front twist-lock associated with the U.S. container and a rear twist-lock associated with the European container.

In another embodiment the longitudinal distance between the front twist-locks of the front dual twist-lock assembly at the front end of the trailer and the front twist-locks of the rear dual twist-lock assembly at a rear end of the trailer is 11986mm.

In a further embodiment a single pair of rear twist-locks are provided at a rear end of the trailer, the spacing between the twist-locks in the dual twist-lock assemblies at the front end of the trailer and the associated rear twist-locks being adjustable.

In a preferred embodiment the trailer is a two-part telescopically adjustable trailer having a front part slidably mounted on a wheeled rear part, the dual twist-lock assemblies being fixed at a front end of the front trailer part and the rear twist-locks being fixed at a rear end of the rear trailer part.

Where the trailer has a fixed bed then two pairs of twist-locks are provided at a front end of the chassis and an associated two pairs of twist-locks are mounted at a rear end of the chassis. Thus the container box is engaged with either the foremost pairs of twist-locks at the front end and rear end of the chassis or the rearmost pairs of twist-locks at the front and rear end of the chassis.

In the case where the trailer is a two part telescopically extendable trailer, two different pairs of front twist-locks are provided on the front trailer part whilst only a single pair of twist-locks is required on the rear trailer part which can be slidably adjustable relative to the front trailer part to position the rear twist-lock pair as required for use with either type of container box.

In another aspect the invention provides a twist-lock assembly for a trailer for freight containers, the twist-lock assembly comprising two juxtaposed twist-locks, each twist-lock including a container receiving platform and a locking bolt for releasable locking engagement with a complementary receiver on a container, said locking bolt being movable relative to the platform between a raised in-use position extending above the platform and a lowered inoperative position below a container receiving surface of the platform, longitudinal axes of the bolts being spaced-apart by a distance of about 151mm. Preferably an opening is provided in the platform and the bolt is movable through the opening between the raised position and the lowered position.

Conveniently the double twist-lock assembly may be provided as a modular unit for attachment to a chassis frame. Alternatively two individual twist-locks may be mounted side by side on the chassis frame with the required spacing between the twist-lock locking bolts.

The invention will be more clearly understood from the following description of some embodiments thereof, given by way of example only, with reference to the accompanying drawings, in which:
Fig. 1 is an elevational view of an extendable trailer according to the invention, shown in a collapsed position;
Fig. 2 is an elevational view of the trailer, shown in an extended position;
Fig. 3 is a detail elevational view showing a front end of the trailer;
Fig. 4 is a detail plan view showing a front bolster of the trailer;
Fig. 5 is an elevational view of a dual twist-lock assembly according to the invention;
Fig. 5 is a plan view of the dual twist-lock assembly;

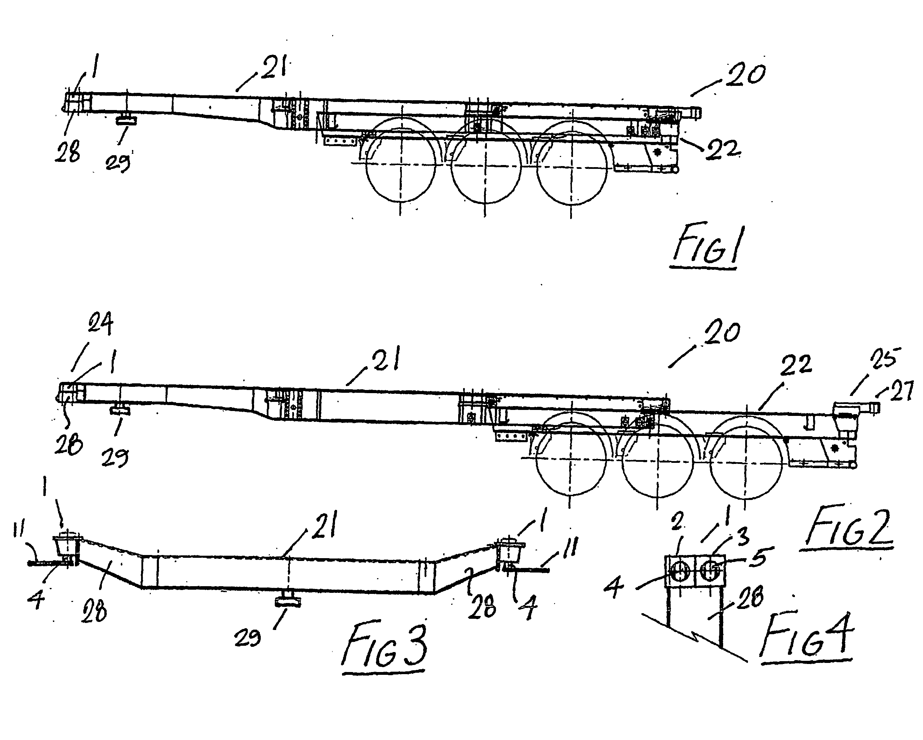

Fig. 7 is an elevational view similar to Fig. 2 showing a standard European container mounted on the trailer;

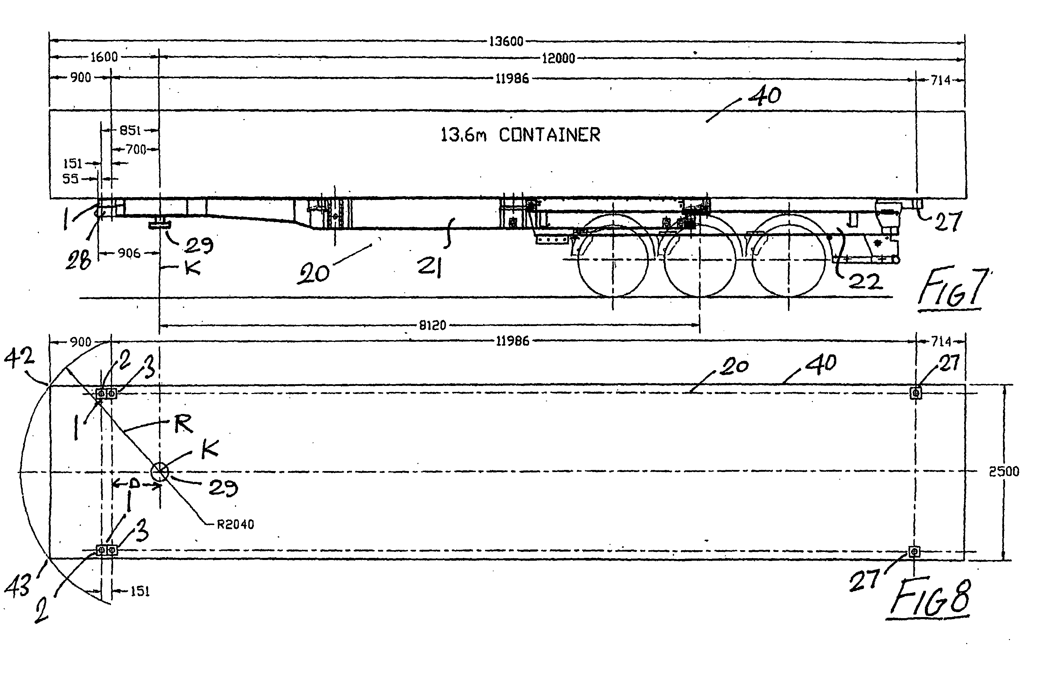

Fig. 8 is a plan view of the trailer and container combination shown in Fig. 7;

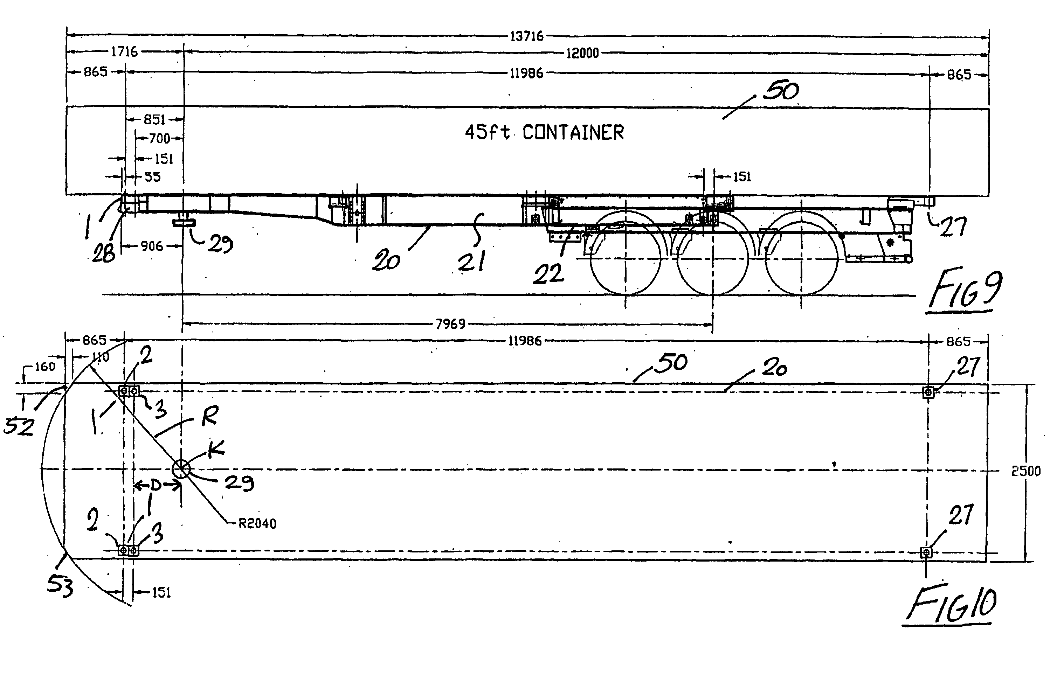

Fig. 9 is an elevational view similar to Fig. 7 showing a U.S. 45 foot container mounted on the trailer; and
Fig. 10 is a plan view of the trailer and container combination shown in Fig. 9.

Referring to the drawings, and initially to Figs. 5 and 6 there is illustrated a twist-lock assembly according to the invention indicated generally by the reference numeral 1. The twist-lock assembly 1 comprises a pair of juxtaposed twist-locks 2,3 each having a locking bolt 4,5. Each locking bolt 4,5 is independently vertically moveable on a support frame 6 between a lowered position beneath a container receiving platform 7 and a raised position as shown in Fig. 5 extending upwardly of the platform 7 for interlocking engagement with a receiver socket on the base of a container box. Each locking bolt 4,5 is movable through an associated opening 8,9 in the platform 7 for movement between the raised and lowered positions. A handle 11, 12 projects outwardly at a lower end of each locking bolt 4,5 and is manually operable to swivel the locking bolt 4,5 about a longitudinal axis A of the locking bolt 4,5 for engagement and release with the receiver socket in the container. The longitudinal axes A of the bolts 4, 5 are spaced-apart by a distance of about 151 mm.

For a fixed bed trailer four of the twist-lock assemblies 1 are mounted on the trailer chassis, a front pair of the twist-lock assemblies 1 being mounted at a front end of the chassis and a rear pair of the twist-lock assemblies 1 being mounted at a rear end of the chassis. Thus two sets of twist-lock mounts are provided on the chassis, one set for engagement with a European standard 13.6m container box and the other set for engagement with a U.S. standard 45ft container box. The distance X between the rotational axes A of each locking bolt 4,5 corresponds to the required different positioning of the two different types of container box on the chassis. Top faces of the platforms 7 of the twist-lock assemblies 1 form a bed for reception of the container.

In use, when a container has been dropped on to the fixed trailer chassis it is dropped on to either all the foremost locking bolts 4,5 or the all the rearmost locking bolts 4,5 according to the container type being loaded on the chassis.

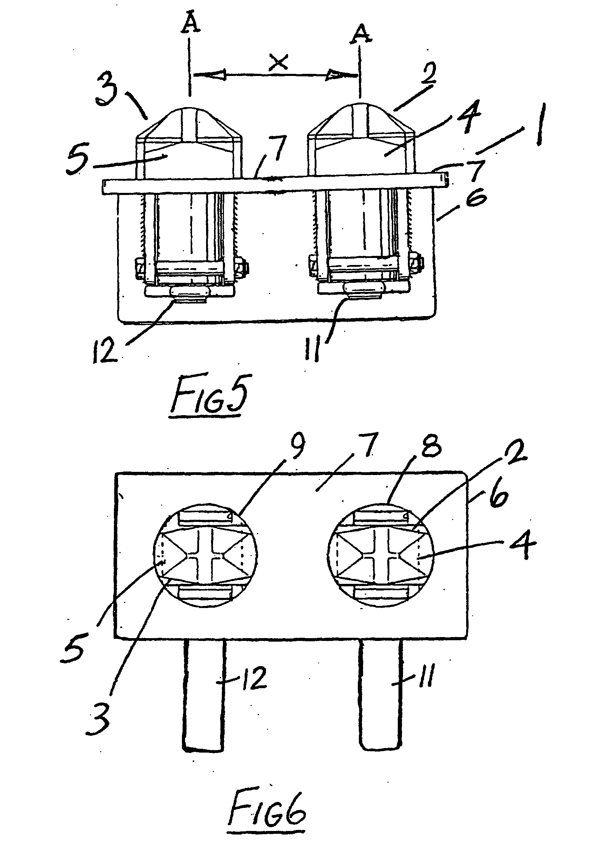

Referring to Figs. 1 to 4 an extendable trailer according to the invention is shown and indicated generally by the reference numeral 20, parts similar to those described previously are assigned the same reference numerals. The extendable trailer 20 is generally similar to the extendable trailer described in my previous patent application, publication No. GB 2 335 891 the contents of which are incorporated herein by reference. The trailer 20 essentially comprises a front part 21 slidably mounted on a wheeled rear part 22. The front part 21 and rear part 22 essentially comprise a pair of spaced-apart longitudinal beams interconnected by cross members. A number of bolsters project outwardly of the beams to support twist-locks at various spacings on the trailer 20. The most important of these from the point of view of this invention are a front bolster assembly 24 mounted at a front end of the front part 21 and a rear bolster assembly 25 mounted at a rear end of the rear part 22. The rear bolster assembly 25 is as described in GB 2 335 891 and essentially provides a single twist-lock 27 at opposite sides of the trailer 20 at a rear end of the trailer 20.

The front bolster assembly 24 has a pair of laterally extending bolster arms 28 at an outer end of which are mounted dual twist-lock assemblies 1 of the type previously described. Each twist-lock assembly 1 has a front twist-lock 2 and a rear twist-lock 3 arranged in a tandem configuration as shown in Fig. 4. A kingpin 29 is mounted on an underside of the front part 21 for engagement with the fifth wheel coupling on a tractor vehicle in conventional fashion.

The mounting of a standard European 13.6 m container 40 on the trailer 20 is shown in Figs. 7 and 8. In this case rear twist-lock receivers on an underside of the container 40 are engagable with the rear twist-locks 27 on the trailer 20 and front twist-lock receivers at a front end of the container 40 are engagable with the rear twist-locks 3 of the dual twist-lock assemblies 1 at a front end of the trailer 20. It will be noted that the radius R between a pivot axis K of the kingpin 29 and a front corner 42, 43 of the container is 2040mm. Also the longitudinal distance D between the bolt axes A of the rear twist-locks 3 and the rotational axis K of the kingpin is 700mm.

Figs. 9 and 10 show the mounting of a standard U.S. 45 foot container 50 on the trailer 20. In this case rear twist-lock receiver sockets on an underside of the container 50 again engage with the rear twist-locks 27 on the trailer 20. However, front twist-lock receivers on the container 50 in this case engage with front twist-locks 2 of the dual twist-lock assemblies 1 mounted at the front end of the trailer 20. The rear trailer part 22 is slid forwardly relative to the front trailer part 21 by 151mm prior to mounting the container 50 on the trailer 20 to accommodate this. It will be noted that in this case also the radius R between the kingpin axis K and front corners 52, 53 of the container 50 is 2040mm.

The overhang at the rear end of the trailer 20 in the case of the U.S. container 50 will be 865mm, whereas in the case of the European container 40 it will be about 714mm. In both cases the distance between the in-use forward twist-locks 2 or 3 and the rear twist-lock 27 is 11986mm corresponding to fixed spacing between the front and rear twist-lock receivers on an underside of a container 40 or 50.

The invention is not limited to the embodiments hereinbefore described but may be varied in both construction and detail within the scope of the appended claims.

## Claims

1. An articulated trailer (20) for transport of freight containers (40, 50) comprising an elongate wheeled chassis (21, 22) having a kingpin (29) adjacent a front end of the chassis (21, 22) for engagement with a fifth wheel coupling on a tractor vehicle, a top of the chassis defining a bed for reception of a container (40, 50) with a plurality of twist-locks (2, 3, 27) mounted on the chassis (21, 22), *said* twist-locks (2, 3, 27) having locking bolts (4, 5) which are releasably engagable with a complementary set of receivers on a container (40, 50) to secure the container (40, 50) on the trailer bed, **characterised in that** a fixed kingpin (29) is mounted on the chassis (21, 22) and two sets of twist-locks (2, 3, 27) are provided on the chassis (21, 22), namely a first twist-lock set (3, 27) associated with carriage of a European standard 13.6m container and a second twist-lock set (2, 27) associated with carriage of a U.S. standard 45ft container.

2. A trailer as claimed in claim 1 wherein each set of twist-locks is positioned on the chassis such that upon engagement with the associated container the radius (R) between a pivot axis (K) of the kingpin (29) and a front corner (42, 43, 52, 53) of the container (40, 50) is 2040mm.

3. A trailer as claimed in claim 1 or claim 2 wherein an associated pair of dual twist-lock assemblies (1) are mounted on the chassis (20, 21) forwardly of the kingpin, each dual twist-lock assembly (1,) including two juxta-posed twist-locks (2, 3) namely a front twist-lock (2) associated with the U.S. container (50) and a rear twist-lock (3) associated with the European container (40), a complementary pair of rear twist-locks (27) associated with each pair of twist-locks (2, 3) in the front dual twist-lock assemblies (1) being mounted at a rear end of the trailer (20).

4. A trailer as claimed in claim 3 wherein the locking bolts (4, 5) in each front dual twist-lock assembly (1) have axes (A) which are longitudinally spaced-apart on the chassis by a distance of about 151mm and the longitudinal distance between the rear twist-lock (3) bolt axis (A) and a rotational axis (K) of the kingpin is 700mm.

5. A trailer as claimed in any of claims 2 to 4 wherein a pair of dual twist-lock assemblies are mounted at a rear end of the trailer, each rear dual twist-lock assembly having a front twist-lock associated with the U.S. container and a rear twist-lock associated with the European container.

6. A trailer as claimed in claim 5 wherein the longitudinal distance between the front twist-locks of the front dual twist-lock assemblies at the front end of the trailer and the front twist-locks of the rear dual twist-lock assemblies at a rear end of the trailer is 11986mm.

7. A trailer as claimed in any of claims 1 to 4 wherein a single pair of rear twist-locks (27) are provided at a rear end of the trailer (20), the spacing between the twist-locks (2, 3) in the dual twist-lock assemblies (1) at the front end of the trailer and the associated rear twist-locks (27) being adjustable.

8. A trailer as claimed in claim 7 wherein the trailer (20) is a two-part telescopically adjustable trailer having a front part (21) slidably mounted on a wheeled rear part, (22), the dual twist-lock assemblies (1) being fixed at a front end of the front trailer part (21) and the rear twist-locks (27) being fixed at a rear end of the rear trailer part (22).

9. A twist-lock assembly for a trailer for freight containers, the twist-lock assembly comprising two juxta-posed twist-locks (2, 3), each twist-lock including a container receiving platform (7) and a locking bolt (4, 5) for releasable locking engagement with a complementary receiver on a container, said locking bolt being movable relative to the platform between a raised in-use position extending above the platform and a lowered inoperative position below a container receiving surface of the platform, longitudinal axes (A) of the bolts being spaced-apart by a distance of about 151mm.

10. A twist-lock assembly as claimed in claim 9 wherein an opening is provided in the platform and the bolt is movable through the opening between the raised position and the lowered position.

## Patentansprüche

1. Gelenkanhänger (20) zum Transport von Frachtcontainern (40, 50), der ein längliches, mit Rädern ausgestattetes Fahrgestell (21, 22) mit einem Zugsattelzapfen (29) angrenzend an ein Vorderende des Fahrgestells (21, 22) für Eingriff mit einer Sattelkupplung an einem Sattelzug aufweist, wobei ein Oberteil des Fahrgestells ein Bett für Aufnahme eines Containers (40, 50) mit einer Mehrzahl von Riegelzapfen (2, 3, 27) angebracht auf dem Fahrgestell (21, 22) begrenzt, und die genannten Riegelzapfen (2, 3 27) Verriegelungsbolzen (4, 5) aufweisen, die lösbar mit einem komplementären Satz von Aufnahmeeinrichtungen an einem Container (40, 50) in Eingriff zu bringen sind, um den Container (40, 50) an dem Anhängerbett zu befestigen, **dadurch gekennzeichnet, dass** ein fixierter Zugsattelzapfen (29) an dem Fahrgestell (21, 22) angebracht ist, und zwei Sätze von Riegelzapfen (2, 3, 27) an dem Fahrgestell (21, 22) vorgesehen sind, nämlich ein erster Riegelzapfensatz (3, 27), der zu einem Fuhrwerk eines 13,6 m-Containers der Euronorm gehört, und ein zweiter Riegelzapfensatz (2, 27), der zu einem Fahrwerk eines 45 Fuß-Containers der US-Norm gehört.

2. Anhänger nach Anspruch 1, bei dem jeder Satz von Riegelzapfen an dem Fahrgestell derart angeordnet ist, dass bei Eingriff mit dem zugehörigen Container der Radius (R) zwischen der Schwenkachse (K) des Zugsattelzapfens (29) und einer vorderen Ecke (42, 43, 52, 53) des Containers (40, 50) 2040 mm beträgt.

3. Anhänger nach Anspruch 1 oder Anspruch 2, bei dem ein zugehöriges Paar doppelter Riegelzapfenbaugruppen (1) an dem Fahrgestell (20, 21) vor dem Zugsattelzapfen angeordnet ist, wobei jede doppelte Riegelzapfenbaugruppe (1) zwei nebeneinandergelegte Riegelzapfen (2, 3) umfasst, nämlich einen vorderen Riegelzapfen (2) verknüpft mit dem US-Container (50) und einen hinteren Riegelzapfen (3) verknüpft mit dem Euro-Container (40), wobei ein komplementäres Paar hinterer Riegelzapfen (27) verknüpft mit jedem Paar von Riegelzapfen (2, 3) in den vorderen doppelten Riegelzapfenbaugruppen (1) an einem hinteren Ende des Anhängers (20) angebracht ist.

4. Anhänger nach Anspruch 3, bei dem die Verriegelungsbolzen (4, 5) in jeder vorderen doppelten Riegelzapfenbaugruppe (1) Achsen (A) aufweisen, die in Längsrichtung auf dem Fahrgestell in einem Abstand von etwa 151 mm voneinander entfernt sind, und der Längsabstand zwischen der Bolzenachse (A) des hinteren Riegelzapfens (3) und einer Drehachse (K) des Zugsattelzapfens 700 mm beträgt.

5. Anhänger nach einem der Ansprüche 2 bis 4, bei dem ein Paar doppelter Riegelzapfenbaugruppen an einem hinteren Ende des Anhängers angebracht sind, wobei jede hintere doppelte Riegelzapfenbaugruppe einen vorderen Riegelzapfen zugehörig zu dem US-Container und einen hinteren Riegelzapfen zugehörig zu dem Euro-Container aufweist.

6. Anhänger nach Anspruch 5, bei dem der Längsabstand zwischen den vorderen Riegelzapfen der vorderen doppelten Riegelzapfenbaugruppen an dem vorderen Ende des Anhängers und den vorderen Riegelzapfen der hinteren doppelten Riegelzapfenbaugruppen an einem hinteren Ende des Anhängern 11986 mm beträgt.

7. Anhänger nach einem der Ansprüche 1 bis 4, bei dem ein einziges Paar hinterer Riegelzapfen (27) an einem hinteren Ende des Anhängers (20) vorgesehen ist, wobei der Abstand zwischen den Riegelzapfen (2, 3) in den doppelten Riegelzapfenbaugruppen (1) an dem vorderen Ende des Anhängers und den zugehörigen hinteren Riegelzapfen (27) einstellbar ist.

8. Anhänger nach Anspruch 7, wobei der Anhänger (20) ein zweiteiliger teleskopartig einstellbarer Anhänger mit einem vorderen Teil (21) ist, der verschiebbar an einem mit Rädern versehenen hinteren Teil (22) angebracht ist, die doppelten Riegelzapfenbaugruppen (1) an einem vorderen Ende des vorderen Anhängerteils (21) befestigt sind und die hinteren Riegelzapfen (27) an einem hinteren Ende des hinteren Anhängerteils (22) befestigt sind.

9. Riegelzapfenbaugruppe für einen Anhänger für Frachtcontainer, wobei die Riegelzapfenbaugruppe zwei nebeneinandergelegene Riegelzapfen (2, 3) aufweist, wobei jeder Riegelzapfen eine Containeraufnahmeplattform (7) und einen Verriegelungsbotzen (4, 5) für lösbaren Verriegelungseingriff mit einem komplementären Aufnehmer auf einem Container umfasst, wobei der genannte Verriegelungsbolzen in bezug zu der Plattform zwischen einer angehobenen Position in Gebrauch, die sich über die Plattform erstreckt, und einer abgesenkten nichtarbeitenden Position unter einer Containeraufnahmefläche der Plattform bewegbar ist, wobei die Längsachsen (A) der Bolzen um einen Abstand von etwa 151 mm voneinander entfernt sind.

10. Riegelzapfenbaugruppe nach Anspruch 9, bei der eine Öffnung in der Plattform vorgesehen ist, und der Bolzen durch die Öffnung zwischen der angehobenen und der abgesenkten Position bewegbar ist.

## Revendications

1. Semi-remorque (20) servant à transporter des conteneurs de fret (40, 50) comprenant un châssis à roues allongé (21, 22) possédant un pivot d'attelage (29) qui est adjacent à une extrémité frontale du châssis (21, 22) en vue d'un engagement avec une sellette d'attelage sur un véhicule tracteur, une partie supérieure du châssis définissant un lit pour la réception d'un conteneur (40, 50) avec une pluralité de verrous tournants (2, 3, 27) montée sur le châssis (21, 22), lesdits verrous tournants (2, 3, 27) ayant des boulons de verrouillage (4, 5) qui peuvent être engagés de façon libérable avec un jeu complémentaire de récepteurs sur un conteneur (40, 50) afin d'assujettir le conteneur (40, 50) sur le lit de la remorque, **caractérisé en ce qu'**un pivot d'attelage fixe (29) est monté sur le châssis (21, 22) et deux jeux de verrous tournants (2, 3, 27) sont prévus sur le châssis (21, 22), notamment un premier jeu de verrous tournants (3, 27) associé au transport d'un conteneur de 13,6 m répondant aux normes européennes, et un deuxième jeu de verrous tournants (2, 27) associé au transport d'un conteneur de 45 pieds répondant aux normes américaines.

2. Remorque, selon la revendication 1, dans laquelle chaque jeu de verrous tournants est positionné sur le châssis, de sorte que, lors de l'engagement avec le conteneur associé, le rayon (R) entre un axe de pivotement (K) du pivot d'attelage (29) et un coin frontal (42, 43, 52, 53) du conteneur (40, 50) est égal à 2040 mm.

3. Remorque, selon la revendication 1 ou la revendication 2, dans laquelle une paire associée d'ensembles de verrous tournants doubles (1) est montée sur le châssis (20, 21) à l'avant du pivot d'attelage, chaque ensemble de verrous tournants doubles (1), y compris deux verrous tournants juxtaposés (2, 3) notamment un verrou tournant avant (2) associé au conteneur américain (50), et un verrou tournant arrière (3) associé au conteneur européen (40), une paire complémentaire de verrous tournants arrière (27) associée à chaque paire de verrous tournants (2, 3) dans les ensembles de verrous tournants doubles avant (1) étant montée au niveau d'une extrémité arrière de la remorque (20).

4. Remorque, selon la revendication 3, dans laquelle les boulons de verrouillage (4, 5) prévus dans chaque ensemble de verrous tournants doubles avant (1) ont des axes (A) qui sont espacés les uns des autres dans le plan longitudinal sur le châssis d'une distance de 151 mm environ, et la distance longitudinale entre l'axe de boulon (A) du verrou tournant arrière (3) et un axe de rotation (K) du pivot d'attelage est égale à 700 mm.

5. Remorque, selon l'une quelconque des revendications 2 à 4, dans laquelle une paire d'ensembles de verrous tournants doubles est montée au niveau d'une extrémité arrière de la remorque, chaque ensemble de verrous tournants doubles arrière ayant un verrou tournant avant qui est associé au conteneur américain, et un verrou tournant arrière qui est associé au conteneur européen.

6. Remorque, selon la revendication 5, dans laquelle la distance longitudinale entre les verrous tournants avant des ensembles de verrous tournants doubles avant, au niveau de l'extrémité frontale de la remorque et les verrous tournants avant des ensembles de verrous tournants doubles arrière, au niveau d'une extrémité arrière de la remorque, est de 11986 mm.

7. Remorque, selon l'une quelconque des revendications 1 à 4, dans laquelle une seule paire de verrous tournants arrière (27) est prévue au niveau d'une extrémité arrière de la remorque (20), l'espacement entre les verrous tournants (2, 3) dans les ensembles de verrous tournants doubles (1) au niveau de l'extrémité frontale de la remorque, et les verrous tournants arrière associés (27), étant réglable.

8. Remorque, selon la revendication 7, dans laquelle la remorque (20) est une remorque en deux parties, réglable de façon télescopique, et possède une partie frontale (21) laquelle est montée de façon coulissante sur une partie arrière à roues (22) ; les ensembles de verrous tournants doubles (1) étant fixés au niveau d'une extrémité frontale de la partie de remorque frontale (21) et les verrous tournants arrière (27) étant fixés au niveau d'une extrémité arrière de la partie de remorque arrière (22).

9. Ensemble de verrou tournant destiné à une remorque pour des conteneurs de fret, l'ensemble de verrous tournants comprenant deux verrous tournants juxtaposés (2, 3), chaque verrou tournant incluant une plate-forme (7) de réception de conteneurs et un boulon de verrouillage (4, 5) permettant un engagement de verrouillage libérable avec un récepteur complémentaire sur un conteneur, ledit boulon de verrouillage pouvant être déplacé par rapport à la plate-forme entre une position relevée "en service" s'étendant au-dessus de la plate-forme, et une position abaissée de "non utilisation" en dessous d'une surface de réception de conteneurs de la plate-forme, alors que les axes longitudinaux (A) des boulons sont espacés les uns des autres d'une distance de 151 mm environ.

10. Ensemble de verrou tournant, selon la revendication 9, dans lequel une ouverture est pratiquée dans la plate-forme, et le boulon peut se déplacer à travers l'ouverture entre la position relevée et la position abaissée.
